(19) Europäisches Patentamt
European Patent Office
Office européen des brevets

(11) **EP 4 314 980 B1**

(12) **EUROPÄISCHE PATENTSCHRIFT**

(45) Veröffentlichungstag und Bekanntmachung des Hinweises auf die Patenterteilung:
**04.06.2025  Patentblatt 2025/23**

(21) Anmeldenummer: **22717160.0**

(22) Anmeldetag: **23.03.2022**

(51) Internationale Patentklassifikation (IPC):
**G05D 23/19** *(2006.01)*      **F24D 19/10** *(2006.01)*

(52) Gemeinsame Patentklassifikation (CPC):
**G05D 23/1923; F24D 19/1039;** Y02E 20/14

(86) Internationale Anmeldenummer:
**PCT/EP2022/057608**

(87) Internationale Veröffentlichungsnummer:
**WO 2022/242934 (24.11.2022 Gazette 2022/47)**

(54) **STEUEREINHEIT SOWIE VERFAHREN ZUR STEUERUNG EINES BETRIEBES EINER WÄRMEERZEUGUNGSANLAGE EINES ENERGIESYSTEMS**

CONTROL UNIT AND METHOD FOR CONTROLLING OPERATION OF A HEAT GENERATING SYSTEM OF AN ENERGY SYSTEM

UNITÉ DE COMMANDE, AINSI QUE PROCÉDÉ DE COMMANDE DU FONCTIONNEMENT D'UNE INSTALLATION DE GÉNÉRATION DE CHALEUR D'UN SYSTÈME ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **21.05.2021  EP 21175319**

(43) Veröffentlichungstag der Anmeldung:
**07.02.2024  Patentblatt 2024/06**

(73) Patentinhaber: **Siemens Aktiengesellschaft**
**80333 München (DE)**

(72) Erfinder:
• **HUYNH, Thanh Phong**
  **59423 Unna (DE)**
• **THIEM, Sebastian**
  **91413 Neustadt an der Aisch (DE)**

(74) Vertreter: **Siemens Patent Attorneys**
**Postfach 22 16 34**
**80506 München (DE)**

(56) Entgegenhaltungen:
**DE-A1- 102019 214 132     KR-B1- 102 145 060**
**US-A1- 2018 320 907     US-A1- 2020 049 381**

**Beschreibung**

Die Erfindung betrifft eine Steuereinheit gemäß dem Oberbegriff des Patentanspruches 1 sowie ein Verfahren gemäß dem Oberbegriff des Patentanspruches 11.

Energiesysteme, beispielsweise eine Stadt, ein Industriegebiet oder ein Gebäude, sind durch eine dezentrale Erzeugung von elektrischer und thermischer Energie gekennzeichnet. Weiterhin können Energiesysteme mit energiesystemexternen Versorgungsnetzen, beispielsweise Stromnetze oder Wärmenetze, elektrische beziehungsweise thermische Energie austauschen.

Typischerweise weisen Energiesysteme zur Bereitstellung von Wärme, beispielsweise zur Deckung eines energiesysteminternen Wärmebedarfs, eine oder mehrere Wärmeerzeugungsanlagen auf. Diese können elektrische und/oder thermische Energie über die jeweiligen Versorgungsnetze beziehen und dadurch die angeforderte Wärme beziehungsweise Wärmeleistung für das Energiesystem bereitstellen.

Weiterhin können Energiesysteme in einen lokalen Energiemarkt eingebunden sein. Hierbei erfolgt die Allokation von Energien über den genannten lokalen Energiemarkt, der Kaufangebote und Verkaufsangebote der verschiedenen Energieformen, insbesondere von elektrischer und thermischer Energie, zusammenführt und koordiniert. Der lokale Energiemarkt wird technisch durch eine Steuerungsplattform realisiert, die die Energieaustausche zwischen den Energiesystemen steuert. Eine solche Steuerungsplattform (Energiemarkt, Energiemarktplattform, Handelsplattform) ist beispielsweise aus dem Dokument EP 3518369 A1 bekannt.

Bei der Einbindung von Wärmeerzeugungsanlagen in einen solchen lokalen Energiemarkt besteht das Problem, dass der Betrieb der Wärmeerzeugungsanlagen unabhängig von ihrer Auslastung erfolgt. Lediglich die maximale Auslastung der jeweiligen Wärmeerzeugungsanlage darf nicht überschritten werden. Allerdings hängt die Leistungszahl von typischen Wärmeerzeugungsanlagen von ihrer Auslastung ab. Insbesondere ist bei Wärmepumpen eine hohe Auslastung anzustreben, um elektrische Energie möglichst effizient in thermische Energie beziehungsweise Wärme zu wandeln. Gleichzeitig sind jedoch weitere sekundäre technische Anforderungen, wie beispielsweise möglichst geringe Kohlenstoffdioxidemissionen beim Betrieb, zu berücksichtigen. Dadurch kann es dennoch nachteilig sein, jede Anlage des Energiesystems mit möglichst hoher Auslastung zu betreiben.

Das Dokument US 2020/0049381 AI betrifft Energiesysteme, insbesondere Energiesysteme zum Heizen und Kühlen von mehreren Gebäuden auf einem Campus oder einer Energiegemeinschaft.

Das Dokument DE 10 2019 214132 A1 betrifft ein Verfahren zum Betreiben eines Netzmanagementsystems für ein lokales Energienetz, bei welchem mittels einer elektronischen Recheneinrichtung des Netzmanagementsystems zumindest eine Betriebsstrategie für einen Energiespeicher einer elektrischen Einrichtung des lokalen Energienetzes in Abhängigkeit von einem Entscheidungskriterium bestimmt wird.

Das Dokument US 2018/320907 A1 betrifft Wärmepumpen, insbesondere dezentrale Wärmepumpennetze innerhalb eines Fernwärmenetzes.

Das Dokument KR 102 145 060 B1 betrifft ein Wärmeversorgungssteuerungssystem zur Steuerung dezentraler verteilter Wärmequellen.

Der vorliegenden Erfindung liegt die Aufgabe zugrunde, die Effizienz der Wärmeerzeugung mittels einer Wärmeerzeugungsanlage eines Energiesystems, insbesondere im Hinblick auf Kohlenstoffdioxidemissionen des Energiesystems, zu verbessern.

Die Aufgabe wird durch eine Steuereinheit mit den Merkmalen des unabhängigen Patentanspruches 1 sowie durch ein Verfahren mit den Merkmalen des unabhängigen Patentanspruches 11 gelöst. In den abhängigen Patentansprüchen sind vorteilhafte Ausgestaltungen und Weiterbildungen der Erfindung angegeben.

Die erfindungsgemäße Steuereinheit zur Steuerung eines Betriebes einer Wärmeerzeugungsanlage eines Energiesystems, insbesondere eines Gebäudes, wobei das Energiesystem an ein Wärmenetz angebunden ist, und mittels der Steuereinheit ein Einspeisen und/oder Ausspeisen einer Wärmeleistung in das Wärmenetz steuerbar ist, wobei mit der Einspeisung eine Gewichtung $g_{e,t}$, mit der Ausspeisung eine Gewichtung $g_{d,t}$ und mit einer Wärmeerzeugung durch die Wärmeerzeugungsanlage eine Gewichtung $g_{i,t}$ assoziiert ist, ist dadurch gekennzeichnet, dass die Steuereinheit dazu ausgebildet ist:

- eine überschüssige Wärmeleistung $P_{\text{excess},t}^{\text{th}}$ aus der Differenz zwischen einer maximalen Wärmeleistung $P_{\text{max},t}^{\text{th}}$ der Wärmeerzeugungsanlage und einer für das Energiesystem erforderlichen Wärmeleistung $P_{\text{demand},t}^{\text{th}}$ zu ermitteln;

- die Wärmeerzeugungsanlage zur Bereitstellung der erforderlichen Wärmeleistung $P_{\text{demand},t}^{\text{th}}$ in den Zeitschritten zu betreiben, für welche $P^{\mathrm{th}}_{\mathrm{demand},t} \cdot g_{d,t} \geq P^{\mathrm{th}}_{\mathrm{max},t} \cdot g_{i,t} - P^{\mathrm{th}}_{\mathrm{excess},t} \cdot g_{e,t}$ ist; und

- die durch die Wärmeerzeugungsanlage in diesen Zeitpunkten erzeugte überschüssige Wärmeleistung $P^{\mathrm{th}}_{\mathrm{excess},t}$ in das Wärmenetz auszuspeisen.

Die relativen Begriffe intern und extern sind im Folgenden stets bezüglich des Energiesystems zu verstehen. Mit anderen Worten sind die Begriffe intern oder extern und die Begriffe energiesystemintern beziehungsweise energiesystemextern äquivalent.

Vorliegend werden Wärmeleistung und Wärmemenge als äquivalent angesehen, da mit einer innerhalb eines Zeitbereiches konstanten oder variierenden Wärmeleistung stets eine zugehörige Wärmemenge innerhalb dieses Zeitbereiches verbunden ist.

Grundsätzlich zeitabhängige Größen sind vorliegend bevorzugt mit einem Index $t$ gekennzeichnet.

Ein Zeitpunkt kann im diskreten Fall einen Zeitbereich kennzeichnen. Beispielsweise wird einem Zeitbereich von 15 Minuten ein Index $t$ und somit im Sinne der vorliegenden Erfindung ein Zeitpunkt zugeordnet.

Weiterhin wird vorliegend ein Zeitpunkt beziehungsweise ein Zeitbereich im Sinne der vorliegenden Erfindung als effizient bezeichnet, wenn für diesen die Ungleichung $P^{\mathrm{th}}_{\mathrm{demand},t} \cdot g_{d,t} \geq P^{\mathrm{th}}_{\mathrm{max},t} \cdot g_{i,t} - P^{\mathrm{th}}_{\mathrm{excess},t} \cdot g_{e,t}$ erfüllt ist. Das Aufeinanderfolgen mehrerer Zeitpunkte kann einen neuen zusammenhängenden Zeitbereich kennzeichnen, der ebenfalls im Sinne der vorliegenden Erfindung effizient ist.

Aus struktureller Sicht definiert insbesondere der IPCC Fifth Assessment Report ein Energiesystem als: "Alle Komponenten, die sich auf die Erzeugung, Umwandlung, Lieferung und Nutzung von Energie beziehen" (siehe Annex I, Seite 1261).

Das Energiesystem ist insbesondere eine Stadt, ein Stadtteil, eine Gemeinde, ein Wohngebiet, ein Campus, ein Gebäude, ein Wohngebäude, ein Bürogebäude, ein Industriegebiet, eine industrielle Anlage und/oder eine sonstige bezüglich einer Energiewandlung, Energielieferung und/oder Energienutzung abgrenzbare bauliche Struktur.

Als energietechnische Anlagen kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen.

Das Energiesystem ist an ein elektrisches Versorgungsnetz (Stromnetz) und thermisches Versorgungsnetz (Wärmenetz) angebunden. Mittels der erfindungsgemäßen Steuereinheit ist die Ausspeisung und/oder Einspeisung von Wärme von dem Energiesystem in das Wärmenetz beziehungsweise aus dem Wärmenetz in das Energiesystem steuerbar. Mit anderen Worten ist die erfindungsgemäße Steuereinheit dazu ausgebildet, den Wärmeaustausch zwischen dem Energiesystem und dem Wärmenetz, insbesondere zwischen dem Energiesystem und dem Wärmenetz sowie zwischen dem Energiesystem und dem Stromnetz, zu steuern.

Das Wärmenetz ist bevorzugt als Fernwärmenetz und/oder Nahwärmenetz ausgebildet.

Weiterhin wird wenigstens ein Teil der eingespeisten Wärme durch die Wärmerzeugungsanlage erzeugt. Insbesondere wandelt die Wärmeerzeugungsanlage elektrische Energie in Wärme. Mit anderen Worten erzeugt die Wärmeerzeugungsanlage eine Wärme, die intern und/oder extern bereitgestellt werden kann. Hierzu kann die Wärmeerzeugungsanlage eine Wärme mit einem bestimmten Temperaturniveau aus dem Wärmenetz, dem Erdreich und/oder der Umgebungsluft aufnehmen, um unter Aufwendung elektrischer Energie, beispielsweise aus dem Stromnetz, eine Wärme mit einem höheren Temperaturniveau bereitzustellen. Die durch die Wärmeerzeugungsanlage bereitgestellte Wärme kann grundsätzlich intern verwendet und/oder in das Wärmenetz zurückgespeist werden, das heißt extern verwendet werden. Die erfindungsgemäße Steuereinheit ist somit dazu ausgebildet, die interne und/oder externe Bereitstellung der Wärme durch die Wärmeerzeugungsanlage und/oder deren interne und/oder externe Verwendung (Einspeisung in das Wärmenetz) zu steuern.

Gemäß der vorliegenden Erfindung ist mit der Einspeisung in das Wärmenetz eine Gewichtung $g_{e,t}$ mit der Ausspeisung aus dem Wärmenetz eine Gewichtung $g_{d,t}$ und mit einer Wärmeerzeugung durch die Wärmeerzeugungsanlage eine Gewichtung $g_{i,t}$ assoziiert. Mit anderen Worten ist der Einspeisung, der Ausspeisung und der internen Wärmeerzeugung jeweils eine Gewichtung zugeordnet. Die Gewichtungen beschreiben hierbei sekundäre mit der Einspeisung, Ausspeisung und Wärmeerzeugung assoziierte Kenngrößen, beispielsweise spezifische Kohlenstoffdioxidemissionen.

Die Steuereinheit kann die Gewichtungen, beispielsweise in Form einer Datenhinterlegung, umfassen. Alternativ oder ergänzend können die Gewichtungen durch eine weitere Einheit des Energiesystems für die Steuereinheit bereitgestellt werden. Weiterhin ist eine externe Bereitstellung vorgesehen. Die Gewichtungen weisen bevorzugt beliebige positive Werte auf.

Zur Erläuterung der Gewichtungen und deren technische Bedeutung sind diese im Folgenden typischerweise und exemplarisch, insbesondere nicht einschränkend, als spezifische Kohlenstoffdioxidemissionen ausgebildet. In einem Zeitbereich weisen die Gewichtungen somit die Einheit kg ($CO_2$) pro kW oder, wenn sich diese eine Energiemenge/-Wärmemenge beziehen, die Einheit kg ($CO_2$) pro kWh auf. Mit anderen Worten ist mit der Einspeisung, mit der Ausspeisung und mit der internen Wärmeerzeugung durch die Wärmeerzeugungsanlage eine spezifische Kohlenstoffdioxidemission verbunden.

Ein Grundgedanke der vorliegenden Erfindung ist, dass grundsätzlich die erforderliche Wärmeleistung (interner Wärmebedarf) durch die Wärmeerzeugungsanlage und/oder durch Ausspeisung aus dem Wärmenetz gedeckt werden kann. Ist die Deckung der erforderlichen Wärmeleistung durch die Wärmeerzeugungsanlage vollständig möglich, so kann die Wärmeerzeugungsanlage bis zu ihrer Auslastung weitere Wärme erzeugen, das heißt die überschüssige Wärmeleistung bereitstellen. Die überschüssige Wärmeleistung wird in das Wärmenetz eingespeist.

Eine wesentliche Erkenntnis der vorliegenden Erfindung ist es, dass es, beispielsweise bezüglich der Kohlenstoffdioxidemissionen des Energiesystems, dann vorteilhaft ist, die Wärmeerzeugungsanlage unter vollständiger Auslastung und Einspeisung der überschüssigen Wärmeleistung zu betreiben, wenn die Ungleichung

$$P_{\text{demand},t}^{\text{th}} \cdot g_{d,t} \geq P_{\max,t}^{\text{th}} \cdot g_{i,t} - P_{\text{excess},t}^{\text{th}} \cdot g_{e,t}$$

erfüllt ist. Mit anderen Worten ist es vorteilhaft, die Wärmeerzeugungsanlage in im Sinne der vorliegenden Erfindung effizienten Zeitpunkten beziehungsweise Zeitbereichen zu betreiben. Hierzu wird für jeden mit *t* gekennzeichneten Zeitpunkt oder Zeitbereich durch die Steuereinheit überprüft, ob die Bedingung $P_{\text{demand},t}^{\text{th}} \cdot g_{d,t} \geq P_{\max,t}^{\text{th}} \cdot g_{i,t} - P_{\text{excess},t}^{\text{th}} \cdot g_{e,t}$ erfüllt ist. Ist diese erfüllt, wird ein Steuersignal durch die Steuereinheit an die Wärmeerzeugungsanlage ermittelt, sodass diese unter Volllast die Wärmerzeugung aufnimmt.

Sind die Gewichtungen Kohlenstoffdioxidemissionen, so entspricht der linke Term $P_{\text{demand},t}^{\text{th}} \cdot g_{d,t}$ den Kohlenstoffdioxidemissionen, die mit einem vollständigen Bezug der erforderlichen Wärmeleistung über das externe Wärmenetz assoziiert sind. Der rechte Term der geforderten Ungleichung entspricht den Kohlenstoffdioxidemissionen, die mit einer internen Deckung (Wärmeerzeugung durch die Wärmeerzeugungsanlage) der erforderlichen Wärmeleistung und mit einer Einspeisung der überschüssigen Wärmeleistung in das Wärmenetz assoziiert sind. Da diese sinnbildlich vom Energiesystem abfließen, weist der Term der Einspeisung ein negatives Vorzeichen auf. Technisch stellt die geforderte Ungleichung beziehungsweise Bedingung somit im Fall von Kohlenstoffdioxidemissionen sicher, dass dann die interne Wärmeerzeugung zur Deckung der erforderlichen Wärmeleistung erfolgt, wenn die Kohlenstoffdioxidbilanz für das Energiesystem - unter der Voraussetzung, dass die Wärmeerzeugungsanlage mit Volllast (vollständiger Auslastung) betrieben wird - besser ist, das heißt geringer ist, als wenn die erforderliche Wärmeleistung durch einen externen Bezug aus dem Wärmenetz gedeckt wird.

Mit anderen Worten wird die Wärmeerzeugungsanlage zur Deckung der internen Wärmelast in den Zeitschritten betrieben, für welche $P_{\text{demand},t}^{\text{th}} \cdot g_{d,t} \geq P_{\max,t}^{\text{th}} \cdot g_{i,t} - P_{\text{excess},t}^{\text{th}} \cdot g_{e,t}$ ist. In den Zeitschritten, für welche $P_{\text{demand},t}^{\text{th}} \cdot g_{d,t} < P_{\max,t}^{\text{th}} \cdot g_{i,t} - P_{\text{excess},t}^{\text{th}} \cdot g_{e,t}$ ist, wird hingegen die erforderliche Wärmeleistung aus dem externen Wärmenetz entnommen. In diesen Zeitschritten wird die Wärmepumpe somit nicht betrieben.

Mit anderen Worten ist die Steuerungseinheit dazu ausgebildet, die Wärmeerzeugungsanlage gemäß einer ersten und zweiten Betriebsart zu steuern. Die erste Betriebsart ist durch $P_{\text{demand},t}^{\text{th}} \cdot g_{d,t} \geq P_{\max,t}^{\text{th}} \cdot g_{i,t} - P_{\text{excess},t}^{\text{th}} \cdot g_{e,t}$ gekennzeichnet. Hierbei wird Wärme durch die Wärmeerzeugungsanlage bei vollständiger Auslastung erzeugt und die überschüssige Wärme in das Wärmenetz eingespeist. Die zweite Betriebsart ist durch $P_{\text{demand},t}^{\text{th}} \cdot g_{d,t} < P_{\max,t}^{\text{th}} \cdot g_{i,t} - P_{\text{excess},t}^{\text{th}} \cdot g_{e,t}$ gekennzeichnet. Hierbei wird die erforderliche Wärme über das Wärmenetz bezogen, das heißt aus diesem ausgespeist beziehungsweise aus diesem entnommen. Die erste Betriebsart ist somit ein Erzeugungsmodus und die zweite Betriebsart ein Bezugsmodus der Wärmeerzeugungsanlage. Die Steuereinheit ist dazu ausgebildet, den jeweiligen Betriebsmodus festzulegen beziehungsweise zwischen dem Erzeugungsmodus und dem Bezugsmodus umzuschalten.

Vorteilhafterweise kann durch die erfindungsgemäß vorgesehenen zwei Betriebsarten die Wärmerzeugungsanlage mit vollständiger Auslastung und somit möglichst energetisch effizient betrieben werden, und zugleich kann eine mit der Gewichtung assoziierten Kenngröße des Energiesystems, beispielsweise seine Kohlenstoffdioxidemissionen, möglichst minimiert werden. Die Gewichtungen können ebenfalls Schadstoffgrößen, beispielsweise Stickoxidemissionen oder weitere Treibhausgase sein, oder eine Verfügbarkeit von erneuerbaren Energien kennzeichnen, die mit Einspeisung, Ausspeisung und/oder Erzeugung von Wärme assoziiert sind. Weiterhin könnte grundsätzlich auch als jeweilige Gewichtung eine Vergütung herangezogen werden, beispielsweise ein Kohlenstoffdioxidpreis.

Im Fall von Kohlenstoffdioxidemissionen wird durch die vorliegende Erfindung der $CO_2$-Fussabdruck (englisch: $CO_2$-Footprint) des Energiesystems bezüglich seiner Wärmeerzeugung verbessert und zudem die Wärmeerzeugungsanlage energetisch effizienter betrieben. Im Fall der Verfügbarkeit von erneuerbaren Energien kann das Energiesystem mittels der erfindungsgemäßen Steuereinheit auf Fluktuation der erneuerbar erzeugten Energien verbessert reagieren und den genannten Fluktuationen und somit der erneuerbaren Erzeugung sinnbildlich folgen.

Mit anderen Worten kann ohne Einbußen hinsichtlich des internen (Wärme)Komforts die Wärmeerzeugungsanlage mit möglichst hoher Effizienz betrieben werden und darüber hinaus eine möglichst hohe Auslastung der Wärmepumpe erreicht werden.

Das erfindungsgemäße Verfahren zur Steuerung eines Betriebes einer Wärmeerzeugungsanlage eines Energiesystems, insbesondere eines Gebäudes, wobei das Energiesystem an ein Wärmenetz angebunden ist, und mittels einer Steuereinheit ein Einspeisen und/oder Ausspeisen einer Wärmeleistung in das Wärmenetz steuerbar ist, wobei mit der Einspeisung eine Gewichtung $g_{e,t}$ mit der Ausspeisung eine Gewichtung $g_{d,t}$ und mit einer Wärmeerzeugung durch die Wärmeerzeugungsanlage eine Gewichtung $g_{i,t}$ assoziiert ist, ist gekennzeichnet dadurch, dass

- eine überschüssige Wärmeleistung $P_{\text{excess},t}^{\text{th}}$ aus der Differenz zwischen einer maximalen Wärmeleistung $P_{\text{max},t}^{\text{th}}$ der Wärmeerzeugungsanlage und einer für das Energiesystem erforderlichen Wärmeleistung $P_{\text{demand},t}^{\text{th}}$ ermittelt wird;

- die Wärmeerzeugungsanlage zur Bereitstellung der erforderlichen Wärmeleistung $P_{\text{demand},t}^{\text{th}}$ in den Zeitschritten betrieben wird, für welche $P_{\text{demand},t}^{\text{th}} \cdot g_{d,t} \geq P_{\text{max},t}^{\text{th}} \cdot g_{i,t} - P_{\text{excess},t}^{\text{th}} \cdot g_{e,t}$ ist; und

- die durch die Wärmeerzeugungsanlage (4) in diesen Zeitpunkten erzeugte überschüssige Wärmleistung $P_{\text{excess},t}^{\text{th}}$ in das Wärmenetz ausgespeist wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Es ergeben sich zur erfindungsgemäßen Steuereinheit gleichartige und gleichwertige Vorteile und Ausgestaltungen des erfindungsgemäßen Verfahrens.

Gemäß einer vorteilhaften Ausgestaltung der Erfindung sind die Gewichtungen $g_{d,t}$, $g_{i,t}$ und $g_{e,t}$ jeweils eine Schadstoffgröße oder eine Umweltgröße, insbesondere eine Treibhausgröße.

Dadurch kann vorteilhafterweise die energetische Effizienz durch die vollständige Auslastung der Wärmeerzeugungsanlage sowie die Effizienz des Energiesystems bezüglich der jeweiligen Schadstoffgröße, beispielsweise Stickoxide, oder die Effizienz des Energiesystems bezüglich der jeweiligen Umweltgröße, beispielsweise Treibhausgases, für die Deckung des internen Wärmebedarfs verbessert werden. Das Energiesystem wird somit synergetisch effizienter bezüglich der Erzeugung von Wärme und bezüglich der Reduzierung von Schadstoffgrößen und/oder Umweltgrößen. Gemischte Gewichtungen können vorgesehen sein, beispielsweise in Form eines Produktes der einzelnen Gewichtungen. Weiterhin sind die Gewichtungen typischerweise spezifisch, das heißt auf eine Wärmeleistung (Masse pro Leistung) oder Wärmemenge (Masse pro Energie) bezogen. Die Gewichtungen kennzeichnen somit die spezifische Emission (in Masse) der jeweiligen Schadstoffgröße, Umweltgröße und/oder Treibhausgases.

In einer vorteilhaften Weiterbildung der Erfindung sind die Gewichtungen $g_{d,t}$, $g_{i,t}$ und $g_{e,t}$ jeweils eine spezifische Kohlenstoffdioxidemission.

Mit anderen Worten werden für die Gewichtungen jeweilige spezifische Kohlenstoffdioxidemissionen verwendet. Dadurch wird vorteilhafterweise das Energiesystem bezüglich der Wärmeerzeugung - aufgrund des möglichen Volllastbetriebes - und bezüglich seiner Kohlenstoffdioxidemissionen effizienter.

Gemäß einer vorteilhaften Ausgestaltung der Erfindung ist die Wärmeerzeugungsanlage als Wärmepumpe mit einer Leistungszahl $COP_t$ ausgebildet, wobei die Steuereinheit dazu ausgebildet ist, die maximale Wärmeleistung aus einer maximalen elektrischen Leistung der Wärmepumpe mittels $P_{\text{max},t}^{\text{th}} = COP_t \cdot P_{\text{max},t}^{\text{el}}$ zu ermitteln.

Mit anderen Worten wird die maximale Wärmeleistung der Wärmepumpe mittels ihrer maximalen elektrischen Leistung, die diese zur Erzeugung beziehungsweise Bereitstellung der Wärme beziehungsweise Wärmeleistung aus dem Stromnetz aufnimmt, ermittelt. In den Zeitpunkten, in welchen der Betrieb effizienter ist, das heißt

$$P_{\mathrm{demand},t}^{\mathrm{th}} \cdot g_{d,t} \geq P_{\mathrm{max},t}^{\mathrm{th}} \cdot g_{i,t} - P_{\mathrm{excess},t}^{\mathrm{th}} \cdot g_{e,t}$$ ist, wird somit die Wärmepumpe im Wesentlichen unter vollständiger Auslastung betrieben, das heißt diese nimmt ihre maximale elektrische Leistung auf. Dadurch stellt die Wärmepumpe ihre im Wesentlichen maximale Wärmeleistung bereit, wobei diese in den genannten, im Sinne der vorliegenden Erfindung effizienten, Zeitpunkten beziehungsweise Zeitbereichen, zur Deckung der erforderlichen Wärmeleistung (interner Wärmebedarf) betrieben wird und die überschüssige Wärmeleistung in das Wärmenetz eingespeist wird. Die Leistung der Wärmepumpe kann bevorzugt durch die Steuereinheit steuerbar sein.

In einer vorteilhaften Weiterbildung der Erfindung ist die Steuereinheit dazu ausgebildet, wenigstens einen Messwert einer Außentemperatur $T_t$ von einer Messeinheit des Energiesystems zu empfangen, und daraus die Leistungszahl **COPt = COPt(Tt)** in Abhängigkeit der Außentemperatur $T_t$ zu ermitteln.

Vorteilhafterweise wird dadurch die temperaturabhängige Effizienz der Wärmepumpe beziehungsweise der Wärmebereitstellung durch die Wärmepumpe berücksichtigt. Das ist deshalb der Fall, da die temperaturabhängige Leistungszahl in die Ungleichung zum Ermitteln der effizienten Zeiten eingeht. Mit anderen Worten werden die effizienten Zeiten, in welchen der Wärmebedarf des Energiesystems intern durch die Wärmepumpe wenigstens teilweise gedeckt wird, durch die Ungleichung beziehungsweise Bedingung

$$P_{\mathrm{demand},t}^{\mathrm{th}} \cdot g_{d,t} \geq \mathrm{COP}_t(T_t) \cdot P_{\mathrm{max},t}^{\mathrm{el}} \cdot g_{i,t} - P_{\mathrm{excess},t}^{\mathrm{th}} \cdot g_{e,t}$$ bestimmt. Mit anderen Worten wird für jeden mit $t$ gekennzeichneten Zeitpunkt oder Zeitbereich die Bedingung $P_{\mathrm{demand},t}^{\mathrm{th}} \cdot$

$g_{d,t} \geq \mathrm{COP}_t(T_t) \cdot P_{\mathrm{max},t}^{\mathrm{el}} \cdot g_{i,t} - P_{\mathrm{excess},t}^{\mathrm{th}} \cdot g_{e,t}$ durch die Steuereinheit überprüft. Ist diese erfüllt, wird ein Steuersignal durch die Steuereinheit an die Wärmepumpe übermittelt, sodass diese unter Volllast betrieben wird. Durch die Berücksichtigung der temperaturabhängigen Leistungszahl der Wärmepumpe in der Bedingung wird die Effizienz der Wärmbereitstellung weiter verbessert.

Gemäß einer vorteilhaften Ausgestaltung der Erfindung ist die Steuereinheit dazu ausgebildet, die Einspeisung in das Wärmenetz derart zu steuern, dass die überschüssige Wärmeleistung $P_{\mathrm{excess},t}^{\mathrm{th}}$ in einen Vorlauf des Wärmenetzes eingespeist wird.

Mit anderen Worten wird bevorzugt die überschüssigen Wärmeleistung dem Vorlauf zugeführt. Hierbei kann das Einspeisen mittels eines Wärmetauschers erfolgen, dem der Vorlauf oder ein Rücklauf des Wärmenetzes zur Aufnahme der überschüssigen Wärme zugeführt wird. Der dann am Wärmetauscher bezüglich seiner Temperatur angehobene Vorlauf oder Rücklauf wird dann dem Vorlauf zugeführt. Mit anderen Worten wird der Rücklauf oder Vorlauf des Wärmenetzes über den Wärmetauscher in den Vorlauf geführt. Dadurch wird insgesamt die überschüssige Wärme/-Wärmeleistung dem Vorlauf des Wärmenetzes zugeführt. Hierbei ist die Wärmeerzeugungsanlage thermisch mit dem Wärmetauscher gekoppelt.

In einer vorteilhaften Weiterbildung der Erfindung ist die Steuereinheit dazu ausgebildet, die Einspeisung in das Wärmenetz derart zu steuern, dass die überschüssige Wärmeleistung $P_{\mathrm{excess},t}^{\mathrm{th}}$ in einen Rücklauf des Wärmenetzes eingespeist wird.

Mit anderen Worten wird bevorzugt die überschüssigen Wärmeleistung dem Rücklauf zugeführt. Hierbei kann das Einspeisen mittels eines Wärmetauschers erfolgen, dem der Rücklauf des Wärmenetzes zur Aufnahme der überschüssigen Wärme zugeführt wird. Der dann am Wärmetauscher bezüglich seiner Temperatur angehobene Rücklauf wird dem Rücklauf des Wärmenetzes wieder zugeführt. Mit anderen Worten wird der Rücklauf des Wärmenetzes über den Wärmetauscher zurück in den Rücklauf geführt. Dadurch wird insgesamt die überschüssige Wärme/Wärmeleistung dem Rücklauf des Wärmenetzes zugeführt. Hierbei ist die Wärmeerzeugungsanlage thermisch mit dem Wärmetauscher gekoppelt.

Gemäß einer bevorzugten Ausgestaltung der Erfindung ist die Steuereinheit dazu ausgebildet, die Einspeisung in das Wärmenetz derart zu steuern, dass durch die Einspeisung der überschüssigen Wärmeleistung $P_{\mathrm{excess},t}^{\mathrm{th}}$ der Rücklauf und/oder der Vorlauf des Wärmenetzes in seiner Temperatur angehoben wird.

Mit anderen Worten kann der Vorlauf und/oder der Rücklauf des Wärmenetzes dem Wärmetauscher zugeführt und somit bezüglich seiner Temperatur durch die Aufnahme der überschüssigen Wärmeleistung angehoben werden. Anschließend wird der in seiner Temperatur angehobene Vorlauf wieder dem Vorlauf zugeführt. Wird der Rücklauf am Wärmetauscher beziehungsweise durch die aufgenommene überschüssige Wärmeleistung in seiner Temperatur angehoben, so kann dieser bevorzugt dem Vorlauf oder dem Rücklauf des Wärmenetzes zugeführt werden. Dadurch bilden sich drei verschiedene bevorzugte Einspeisemodi aus, nämlich Rücklauf-Wärmeaufnahme-Vorlauf (erster Einspeisemodus), Rücklauf-Wärmeaufnahme-Rücklauf (zweiter Einspeisemodus) sowie Vorlauf-Wärmeaufnahme-Vorlauf (dritter Einspeisemodus).

Mit anderen Worten erfolgt die Einspeisung in das Wärmenetz bevorzugt nach dem ersten Einspeisemodus, wobei hierbei die durch die Wärmeerzeugungsanlage erzeugte überschüssige Wärmeleistung $P_{\text{excess},t}^{\text{th}}$ auf den Rücklauf des Wärmenetzes übertragen und der dadurch in seiner Temperatur angehobene Rücklauf dem Vorlauf des Wärmenetzes zugeführt wird, oder nach dem zweiten Einspeisemodus, wobei hierbei die durch die Wärmeerzeugungsanlage erzeugte überschüssige Wärmeleistung $P_{\text{excess},t}^{\text{th}}$ auf den Rücklauf des Wärmenetzes übertragen und der dadurch in seiner Temperatur angehobene Rücklauf in den Rücklauf des Wärmenetzes rückgeführt wird, oder nach dem dritten Einspeisemodus, wobei hierbei die durch die Wärmeerzeugungsanlage erzeugte überschüssige Wärmeleistung $P_{\text{excess},t}^{\text{th}}$ auf den Vorlauf des Wärmenetzes übertragen und der dadurch in seiner Temperatur angehobene Vorlauf in den Vorlauf des Wärmenetzes rückgeführt wird.

In einer vorteilhaften Weiterbildung der Erfindung ist die Steuereinheit dazu ausgebildet, die Einspeisung und/oder Ausspeisung aus dem Vorlauf und/oder Rücklauf des Wärmenetzes durch ein Schalten von Ventilen zu steuern.

Mit anderen Worten ist die Steuereinheit dazu ausgebildet, durch das Einstellen der Ventile zwischen den drei genannten Einspeisemodi umzuschalten beziehungsweise den Einspeisemodus einzustellen. Gemäß dem ersten Einspeisemodus wird die Temperatur des Rücklaufs beziehungsweise des Rücklaufwassers durch die überschüssige Wärmeleistung angehoben und in den Vorlauf gespeist. Gemäß dem zweiten Einspeisemodus wird die Temperatur des Rücklaufs beziehungsweise des Rücklaufwassers durch die überschüssige Wärmeleistung angehoben und in den Rücklauf rückgespeist. Gemäß dem dritten Einspeisemodus wird die Temperatur des Vorlaufs beziehungsweise des Vorlaufwassers durch die überschüssige Wärmeleistung angehoben und in den Vorlauf rückgespeist.

Weiterhin kann die Steuereinheit bevorzugt dazu ausgebildet sein, den jeweiligen Massenfluss des Wärmeträgermediums des Wärmenetzes zu steuern. Das Wärmeträgermedium ist beispielsweise Wasser.

Gemäß einer vorteilhaften Ausgestaltung der Erfindung weist die Steuereinheit ein Kommunikationsmodul auf, welches einen Datenaustausch mit einer bezüglich mehreren Energiesystemen zentralen Steuervorrichtung ermöglicht, wobei die zentrale Steuervorrichtung Energieaustausche zwischen den Energiesystemen steuert, und das Kommunikationsmodul derart ausgebildet ist, die Gewichtungen $g_{d,t}$, $g_{i,t}$ und $g_{e,t}$ von der zentralen Steuervorrichtung zu empfangen.

Mit anderen Worten ist es bevorzugt, wenn die Gewichtungen $g_{d,t}$, $g_{i,t}$ und $g_{e,t}$ durch eine bezüglich mehreren Energiesystemen zentralen Steuervorrichtung bereitgestellt werden.

Dadurch werden die Energiesysteme bezüglich ihrer Effizienz durch die zentrale Steuervorrichtung koordiniert. Dadurch wird die Effizienz der Wärmebereitstellung, insbesondere im Hinblick auf die gesamtheitlichen Kohlenstoffdioxidemissionen, verbessert. Die zentrale Steuervorrichtung gibt hierbei sinnbildlich die Gewichtungen vor und übermittelt diese an die Energiesysteme beziehungsweise den jeweiligen Steuereinheiten, sodass jedes der Energiesysteme seine Wärmeerzeugungsanlage beziehungsweise Wärmeerzeugungsanlagen in den jeweiligen effizienten Zeitpunkten/Zeitbereichen betreiben kann. Die bezüglich der Energiesysteme zentrale Steuervorrichtung berechnet oder ermittelt die Gewichtungen aus Daten/Informationen, die die Energiesysteme an diese vorab übermitteln. Die Berechnung kann mittels eines Optimierungsverfahrens erfolgen, wobei beispielsweise die Gesamtkohlenstoffdioxidemission aller teilnehmenden Energiesysteme minimiert wird. Dadurch kann der $CO_2$-Fussabdruck der Energiesysteme weiter reduziert beziehungsweise verbessert werden.

Weiterhin kann ein Energiemanagementsystem des Energiesystems die Steuereinheit und somit das Kommunikationsmodul umfassen. Da die zentrale Steuervorrichtung die Gewichtungen vorgibt und somit im Wesentlichen festlegt, wann die jeweiligen Wärmeerzeugungsanlagen betrieben werden, steuert die zentrale Steuervorrichtung (über die Steuereinheit) die Wärmeerzeugung und Wärmeeinspeisung. Somit steuert die zentrale Energiemarktplattform, zumindest indirekt, die Ventile und/oder Massenflüsse bezüglich der Wärmeübertragung der überschüssigen Wärmeleistung auf das Wärmenetz. Weiterhin kann die zentrale Steuervorrichtung den Verbrauch und/oder die Erzeugung von elektrischer Energie des jeweiligen Energiesystems steuern. Die zentrale Steuervorrichtung ist somit als lokale Energiemarktplattform bezüglich Wärme und in einer vorteilhaften Ausgestaltung als lokale Energiemarktplattform für Wärme und Strom ausgebildet. Mit anderen Worten bildet die zentrale Steuervorrichtung technisch einen lokalen Energiemarkt für Wärme und/oder Strom aus. Mittels des Kommunikationsmoduls könnten weiterhin Angebote bezüglich der Wärmeausspeisung und/oder Wärmeeinspeisung an die zentrale Steuervorrichtung übermittelt werden.

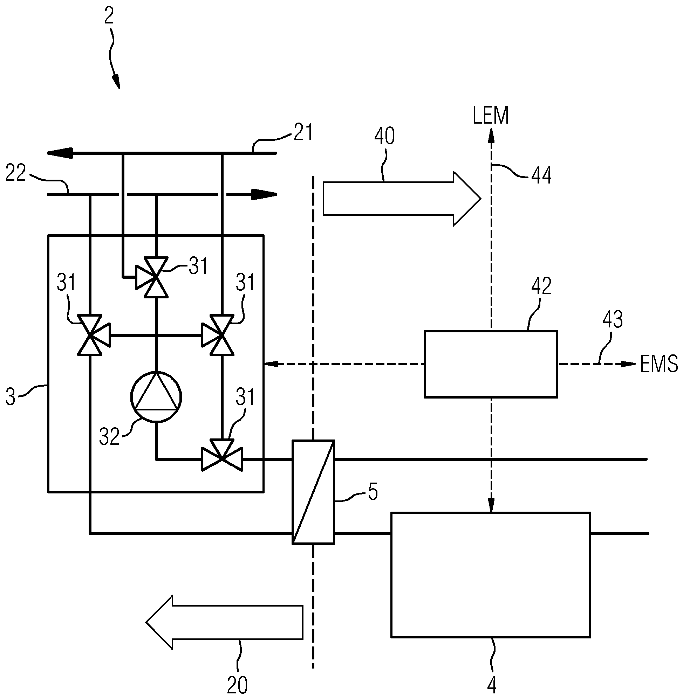

Weitere Vorteile, Merkmale und Einzelheiten der Erfindung ergeben sich aus den im Folgenden beschriebenen Ausführungsbeispielen sowie anhand der Zeichnung.

Dabei zeigt die einzige Figur schematisiert ein Gesamtsystem mit einer Steuereinheit gemäß einer Ausgestaltung der vorliegenden Erfindung.

Gleichartige, gleichwertige oder gleichwirkende Elemente können in der Figur mit denselben Bezugszeichen versehen sein.

Die Figur zeigt schematisiert bezüglich eines Wärmenetzes 2 eine Primärseite 20 und Sekundärseite 40. Hierbei umfasst die Primärseite 20 ein Wärmenetz 2 sowie eine Kopplungseinheit 3. Die Kopplungseinheit 3 koppelt das Wärmenetz 2 mit der Sekundärseite 40 bezüglich eines Wärmeaustausches. Die Sekundärseite 40 umfasst beziehungsweise kennzeichnet die Seite des oder der Energiesysteme. Hierbei umfasst das Energiesystem eine Steuereinheit 42 gemäß einer Ausgestaltung der vorliegenden Erfindung sowie eine Wärmepumpe 4.

Zur Kopplung des Wärmenetzes 2 mit den wärmetechnischen Anlagen der Sekundärseite 40, insbesondere mit der Wärmpumpe 4, ist ein Wärmetauscher 5 vorgesehen. Maßgeblich für die übertragende Wärmeleistung ist die Temperaturdifferenz zwischen Wärmequelle und Wärmesenke innerhalb des Wärmetauschers 5 sowie der Massenfluss des Übertragungsmediums. Das Übertragungsmedium ist typischerweise Wasser. Die Temperatur der Wärmequelle, vorliegend die Wärmepumpe 4 auf der Sekundärseite 40, ist durch die Steuereinheit 42 steuerbar oder einstellbar. Der Massenfluss kann grundsätzlich mittels Ventile, die die Steuereinheit 42 steuert, reguliert werden. Die Temperatur der Wärmequelle stellt dabei je nach Betriebsmodi die Vorlauftemperatur des Wärmenetzes 2 oder die Temperatur nach eines Sekundärnetzes des Energiesystems nach einem Eigenverbrauch durch das Energiesystem dar.

Das Wärmenetz 2 weist einen Vorlauf 21 sowie einen Rücklauf 22 auf. Über die Kopplungsvorrichtung 3 in Verbindung mit dem Wärmetauscher 5 werden der Vorlauf 21 und/oder Rücklauf 22 des Wärmenetzes 2 mit der Wärmepumpe 4, das heißt mit der Wärmerzeugungsanlage des Energiesystems, thermisch gekoppelt. Hierzu umfasst die Kopplungsvorrichtung 3 mehrere Ventile 31 sowie eine Pumpe 32. Die hydraulische Verschaltung der Ventile ist in der Figur als Innenleben der Kopplungsvorrichtung 3 dargestellt. Die vorliegende Verschaltung der Ventile ermöglicht drei Einspeisemodi der durch die Wärmepumpe 4 erzeugten Wärme in das Wärmenetz 2.

Gemäß einem ersten Einspeisemodus werden die Ventile 31 durch die Steuereinheit 42 derart gesteuert, dass der Rücklauf 22 des Wärmnetzes 2 über den Wärmetauscher 5 und zurück in den Vorlauf 21 des Wärmenetzes 2 geführt wird. In einem zweiten Einspeisemodus werden die Ventile 31 durch die Steuereinheit 42 derart gesteuert, dass der Rücklauf 22 des Wärmenetzes 2 über den Wärmetauscher 5 und zurück in den Rücklauf 22 geführt wird. Mit anderen Worten bildet sich durch die Schaltung der Ventile 31 ein Bypass für den Rücklauf 22 aus, der über den Wärmetauscher 5 läuft. In einem dritten Einspeisemodus werden die Ventile 31 durch die Steuereinheit 42 derart gesteuert, dass der Vorlauf 21 des Wärmenetzes 2 über den Wärmetauscher 5 und zurück in den Vorlauf 21 geführt wird. Mit anderen Worten bildet sich durch die Schaltung der Ventile 31 ein Bypass für den Vorlauf 21 aus, der über den Wärmetauscher 5 läuft. Die Steuereinheit 42 kann durch die Steuerung der Ventile 31 zwischen den Einspeisemodi umschalten beziehungsweise den jeweiligen Einspeisemodus einstellen.

Weiterhin kann die Kopplungsvorrichtung 3 den Wärmetauscher 5 umfassen.

Die Sekundärseite 40 beziehungsweise das Energiesystem umfasst das bereits obenstehend genannte Sekundärwärmenetz. Das in der Figur lediglich angedeutete Sekundärwärmenetz dient weiterhin der Verteilung der Wärme innerhalb des Energiesystems.

Die Steuereinheit 42 ist ebenfalls auf der Sekundärseite 40 angeordnet. Vorliegend umfasst das Energiesystem die Steuereinheit 42. Die Steuereinheit 42 ist dazu ausgebildet, mit der Kopplungsvorrichtung 3, mit der Wärmepumpe 4, mit einem Energiemanagementsystem 43 des Energiesystems sowie mit einer bezüglich mehreren Energiesystemen zentralen Steuervorrichtung 44 Daten/Informationen, insbesondere Steuersignale, Regelwerte und/oder dergleichen, auszutauschen. Die zentrale Steuervorrichtung 44 bildet vorliegend einen lokalen Energiemarkt aus. Mit anderen Worten ermöglicht die Steuereinheit 42 eine Kommunikation mit der Kopplungsvorrichtung 3, mit der Wärmepumpe 4, mit dem Energiemanagementsystem 43 sowie mit dem lokalen Energiemarkt 44. Diese Kommunikationsmöglichkeiten sind in der Figur durch die gestrichelten Pfeile verdeutlicht, die von der Steuereinheit 42 ausgehen.

Die Steuereinheit 42 ist somit dazu ausgebildet, die Ventile 31 und/oder Pumpen 32 der Kopplungsvorrichtung 3 sowie die Wärmepumpe 4 bezüglich ihres Betriebes zu steuern. Dieses Steuern kann mittels Steuersignalen erfolgen, die die Steuereinheit basierend auf vom lokalen Energiemarkt 44 und/oder vom Energiemanagementsystem 43 des Energiesystems empfangenen Daten erzeugt und an die Wärmepumpe 4 überträgt.

Gemäß einem ersten Schritt des Verfahrens nach einer Ausgestaltung der vorliegenden Erfindung wird eine überschüssige Wärmeleistung $P^{\mathrm{th}}_{\mathrm{excess},t}$ aus der Differenz zwischen einer maximalen Wärmeleistung $P^{\mathrm{th}}_{\mathrm{max},t}$ der Wärmepumpe 4 und einer für das Energiesystem erforderlichen Wärmeleistung $P^{\mathrm{th}}_{\mathrm{demand},t}$ durch die Steuereinheit 42 ermittelt. Hierzu wird die erforderliche Wärmeleistung beispielsweise durch das Energiemanagementsystem 43 für die Steuereinheit 42 bereitgestellt. Aus der Differenz zwischen der maximal möglichen Wärmeleistung und der innerhalb des Energiesystems erforderlichen Wärmeleistung kann die Steuereinheit 42 die überschüssige Wärmeleistung berechnen.

In einem zweiten Schritt des Verfahrens wird die Wärmepumpe zur Bereitstellung der erforderlichen Wärmeleistung $P^{\mathrm{th}}_{\mathrm{demand},t}$ in den Zeitschritten betrieben, für welche $P^{\mathrm{th}}_{\mathrm{demand},t} \cdot g_{d,t} \geq P^{\mathrm{th}}_{\mathrm{max},t}$. $g_{i,t} - P^{\mathrm{th}}_{\mathrm{excess},t} \cdot g_{e,t}$ ist. Mit anderen Worten prüft die Steuereinheit, ob die Bedingung

$$P^{\text{th}}_{\text{demand},t} \cdot g_{d,t} \geq P^{\text{th}}_{\text{max},t} \cdot g_{i,t} - P^{\text{th}}_{\text{excess},t} \cdot g_{e,t}$$ erfüllt ist, wobei die Wärmepumpe 4 betrieben wird, wenn diese erfüllt ist. Ansonsten wird die erforderliche Wärmeleistung aus dem Wärmenetz 2 bezogen beziehungsweise entnommen. Hierzu steuert die Steuereinheit 42 die Wärmepumpe 4 beziehungsweise die Kopplungsvorrichtung 3, insbesondere die Ventile 31 und/oder die 32, entsprechend.

Weiterhin wird in einem dritten Schritt des Verfahrens die durch die Wärmepumpe 4 in diesen Zeitpunkten erzeugte überschüssige Wärmleistung $P^{\text{th}}_{\text{excess},t}$ in das Wärmenetz ausgespeist, das heißt auf das Wärmenetz 2 übertragen.

Mit anderen Worten kann in den Zeitpunkten, die die oben genannte Bedingung erfüllen, die Wärmepumpe 4 vollständig ausgelastet werden, wobei die überschüssige Wärmeleistung, die energiesystemintern nicht erforderlich ist, an das Wärmenetz 2 zur weiteren Verwendung, beispielsweise durch weitere Energiesysteme, abgegeben wird. Dadurch wird die Wärmepumpe 4 länger mit einer vollständigen Auslastung betrieben, sodass diese - zumindest in den genannten effizienten Zeitbereichen - eine höhere Leistungszahl und somit eine höhere Effizienz aufweist.

Die effizienten Zeitpunkte beziehungsweise Zeitbereiche werden durch die Bedingung

$$P^{\text{th}}_{\text{demand},t} \cdot g_{d,t} \geq P^{\text{th}}_{\text{max},t} \cdot g_{i,t} - P^{\text{th}}_{\text{excess},t} \cdot g_{e,t}$$ festgelegt, die mehrere Gewichtungen oder Gewichtungsfaktoren $g_{d,t}$ $g_{i,t}$ und $g_{e,t}$ umfasst. Die Gewichtungsfaktoren stellen technisch sicher, dass nicht nur die energetische Effizienz der Wärmepumpe 4, das heißt die Effizienz der Wärmeerzeugung aus Strom, maßgeblich ist, sondern ebenfalls weitere wichtige technische Kenngrößen, wie beispielsweise Kohlenstoffdioxidemissionen, berücksichtigt werden können. Die Wärmepumpe 4 wird somit durch die Steuereinheit 4 dann mit Volllast betrieben (energetische Effizienz), wenn zugleich eine für das Energiesystem geringere Kohlenstoffdioxidemission erreicht werden kann. Mit anderen Worten ist es sinnbildlich in den genannten effizienten Zeitpunkten beziehungsweise Zeitbereichen für das Energiesystem günstiger, die Wärme selbst durch die Wärmepumpe 4 zu erzeugen und den Überschuss einzuspeisen, als die Wärme aus dem Wärmenetz 2 zu beziehen. In den Zeitpunkten beziehungsweise Zeitbereichen, in welchen die Bedingung nicht erfüllt ist, ist es sinnbildlich für das Energiesystem günstiger, die Wärme zur Deckung des internen Wärmebedarfs aus dem Wärmenetz 2 zu entnehmen. Die Quelle der Wärme für den Wärmebedarf - Wärmenetz 2 oder Wärmepumpe 4 - wird somit dynamisch durch die Steuereinheit 42 in Abhängigkeit der Gewichtungen gesteuert. Somit stellen die Gewichtungen sicher, dass das technische Ziel einer möglichst geringen Kohlenstoffdioxidemission und einer möglichst hohen energetischen Effizienz der Wärmedeckung synergetisch zugleich erreicht werden.

Die Gewichtungen $g_{d,t}$ $g_{i,t}$ und $g_{e,t}$ können durch die zentrale Steuervorrichtung 44 und/oder dem Energiemanagementsystem 43 bereitgestellt und/oder an die Steuereinheit 42 übermittelt werden. Dadurch ist eine dynamische Anpassung beispielsweise bezüglich der Kohlenstoffdioxidemissionen möglich, da sich beispielsweise die mit dem Bezug (Ausspeisung) aus dem Wärmenetz 2 assoziierten Kohlenstoffdioxidemissionen zeitlich ändern können. Weiterhin können sich die mit der Wärmeerzeugung assoziierten Kohlenstoffdioxidemissionen zeitlich ändern. Mit anderen Worten können die Gewichtungen $g_{d,t}$ $g_{i,t}$ und $g_{e,t}$ zeitabhängig sein, sodass diese in regelmäßigen zeitlichen Abständen durch die zentrale Steuervorrichtung 44 und/oder das Energiemanagementsystem an die Steuereinheit 42 übermittelt werden, beispielsweise alle 15 Minuten für einen Tag im Voraus.

Somit ermöglicht die dargestellte Ausgestaltung der vorliegenden Erfindung die energetische Effizienz der Wärmeerzeugung durch die Wärmepumpe 4 sowie die Kohlenstoffdioxidemissionen des Energiesystems zeitgleich zu reduzieren und weiterhin beide Reduktionen synergetisch zu kombinieren.

Bezugszeichenliste

| | |
|---|---|
| 2 | Wärmenetz |
| 3 | Kopplungsvorrichtung |
| 4 | Wärmepumpe |
| 5 | Wärmetauscher |
| 20 | Primärseite |
| 21 | Vorlauf |
| 22 | Rücklauf |
| 31 | Ventil |
| 32 | Pumpe |
| 40 | Sekundärseite |
| 42 | Steuereinheit |
| 43 | Energiemanagementsystem |

44    zentrale Steuervorrichtung

**Patentansprüche**

1.  Steuereinheit (42) zur Steuerung eines Betriebes einer Wärmeerzeugungsanlage (4) eines Energiesystems, insbesondere eines Gebäudes, wobei das Energiesystem an ein Wärmenetz (2) angebunden ist, und mittels der Steuereinheit (42) ein Einspeisen und/oder Ausspeisen einer Wärmeleistung in das Wärmenetz (2) steuerbar ist, wobei mit der Einspeisung eine Gewichtung $g_{e,t}$, mit der Ausspeisung eine Gewichtung $g_{d,t}$ und mit einer Wärmeerzeugung durch die Wärmeerzeugungsanlage (4) eine Gewichtung $g_{i,t}$ assoziiert ist, **dadurch gekennzeichnet, dass** die Steuereinheit (42) dazu ausgebildet ist,

    - eine überschüssige Wärmeleistung $P_{excess,t}^{th}$ aus der Differenz zwischen einer maximalen Wärmeleistung $P_{max,t}^{th}$ der Wärmeerzeugungsanlage (4) und einer für das Energiesystem erforderlichen Wärmeleistung $P_{demand,t}^{th}$ zu ermitteln;

    - die Wärmeerzeugungsanlage (4) zur Bereitstellung der erforderlichen Wärmeleistung $P_{demand,t}^{th}$ in den Zeitschritten zu betreiben, für welche $P_{demand,t}^{th} \cdot g_{d,t} \geq P_{max,t}^{th} \cdot g_{i,t} - P_{excess,t}^{th} \cdot g_{e,t}$ ist; und
    - die durch die Wärmeerzeugungsanlage (4) in diesen Zeitpunkten erzeugte überschüssige Wärmeleistung $P_{excess,t}^{th}$ in das Wärmenetz (2) auszuspeisen.

2.  Steuereinheit (42) gemäß Anspruch 1, **dadurch gekennzeichnet, dass** die Gewichtungen $g_{d,t}$, $g_{i,t}$ und $g_{e,t}$ jeweils eine Schadstoffgröße oder eine Umweltgröße sind.

3.  Steuereinheit (42) gemäß Anspruch 1 oder 2, **dadurch gekennzeichnet, dass** die Gewichtungen $g_{d,t}$, $g_{i,t}$ und $g_{e,t}$ jeweils eine spezifische Kohlenstoffdioxidemission sind.

4.  Steuereinheit (42) gemäß einem der vorhergehenden Ansprüche, **dadurch gekennzeichnet, dass** die Wärmeerzeugungsanlage (4) als Wärmepumpe mit einer Leistungszahl $COP_t$ ausgebildet ist, wobei die Steuereinheit (42) dazu ausgebildet ist, die maximale Wärmeleistung aus einer maximalen elektrischen Leistung der Wärmepumpe mittels $P_{max,t}^{th} = COP_t \cdot P_{max,t}^{el}$ zu ermitteln.

5.  Steuereinheit (42) gemäß Anspruch 4, **dadurch gekennzeichnet, dass** diese dazu ausgebildet ist, wenigstens einen Messwert einer Außentemperatur $T_t$ von einer Messeinheit des Energiesystems zu empfangen, und daraus die Leistungszahl $COP_t = COP_t(T_t)$ in Abhängigkeit der Außentemperatur $T_t$ zu ermitteln.

6.  Steuereinheit (42) gemäß einem der vorhergehenden Ansprüche, **dadurch gekennzeichnet, dass** diese dazu ausgebildet ist, die Einspeisung in das Wärmenetz (2) derart zu steuern, dass die überschüssige Wärmeleistung $P_{excess,t}^{th}$ in einen Vorlauf des Wärmenetzes (2) eingespeist wird.

7.  Steuereinheit (42) gemäß einem der vorhergehenden Ansprüche, **dadurch gekennzeichnet, dass** diese dazu ausgebildet ist, die Einspeisung in das Wärmenetz (2) derart zu steuern, dass die überschüssige Wärmeleistung $P_{excess,t}^{th}$ in einen Rücklauf des Wärmenetzes (2) eingespeist wird.

8.  Steuereinheit (42) gemäß Anspruch 6 oder 7, **dadurch gekennzeichnet, dass** diese dazu ausgebildet ist, die Einspeisung in das Wärmenetz (2) derart zu steuern, dass durch die Einspeisung der überschüssigen Wärmeleistung $P_{excess,t}^{th}$ der Rücklauf und/oder der Vorlauf des Wärmenetzes (2) in seiner Temperatur angehoben wird.

9.  Steuereinheit (42) gemäß einem der Ansprüche 6 bis 8, **dadurch gekennzeichnet, dass** diese dazu ausgebildet ist, die Einspeisung und/oder Ausspeisung aus dem Vorlauf und/oder Rücklauf des Wärmenetzes (2) durch ein Schalten von Ventilen (31) zu steuern.

10. Steuereinheit (42) gemäß einem der vorhergehenden Ansprüche, **dadurch gekennzeichnet, dass** diese ein Kommunikationsmodul aufweist, welches einen Datenaustausch mit einer bezüglich mehreren Energiesystemen zentralen Steuervorrichtung (44) ermöglicht, wobei die zentrale Steuervorrichtung (44) Energieaustausche zwischen den Energiesystemen steuert, und das Kommunikationsmodul derart ausgebildet ist, die Gewichtungen $g_{d,t}$, $g_{i,t}$ und $g_{e,t}$ von der zentralen Steuervorrichtung (44) zu empfangen.

11. Verfahren zur Steuerung eines Betriebes einer Wärmeerzeugungsanlage (4) eines Energiesystems, insbesondere eines Gebäudes, wobei das Energiesystem an ein Wärmenetz (2) angebunden ist, und mittels einer Steuereinheit (42) ein Einspeisen und/oder Ausspeisen einer Wärmeleistung in das Wärmenetz (2) steuerbar ist, wobei mit der Einspeisung eine Gewichtung $g_{e,t}$, mit der Ausspeisung eine Gewichtung $g_{d,t}$ und mit einer Wärmeerzeugung durch die Wärmeerzeugungsanlage (4) eine Gewichtung $g_{i,t}$ assoziiert ist, **gekennzeichnet dadurch, dass**

- eine überschüssige Wärmeleistung $P_{\mathrm{excess},t}^{\mathrm{th}}$ aus der Differenz zwischen einer maximalen Wärmeleistung $P_{\mathrm{max},t}^{\mathrm{th}}$ der Wärmeerzeugungsanlage (4) und einer für das Energiesystem erforderlichen Wärmeleistung $P_{\mathrm{demand},t}^{\mathrm{th}}$ ermittelt wird;

- die Wärmeerzeugungsanlage (4) zur Bereitstellung der erforderlichen Wärmeleistung $P_{\mathrm{demand},t}^{\mathrm{th}}$ in den Zeitschritten betrieben wird, für welche $P_{\mathrm{demand},t}^{\mathrm{th}} \cdot g_{d,t} \geq P_{\mathrm{max},t}^{\mathrm{th}} \cdot g_{i,t} - P_{\mathrm{excess},t}^{\mathrm{th}} \cdot g_{e,t}$ ist; und

- die durch die Wärmeerzeugungsanlage (4) in diesen Zeitpunkten erzeugte überschüssige Wärmleistung $P_{\mathrm{excess},t}^{\mathrm{th}}$ in das Wärmenetz (2) ausgespeist wird.

12. Verfahren gemäß Anspruch 11, **gekennzeichnet dadurch, dass** die Einspeisung in das Wärmenetz (2) nach einem ersten Einspeisemodus erfolgt, wobei hierbei die durch die Wärmeerzeugungsanlage (4) erzeugte überschüssige Wärmeleistung $P_{\mathrm{excess},t}^{\mathrm{th}}$ auf einen Rücklauf des Wärmenetzes (2) übertragen und der dadurch in seiner Temperatur angehobene Rücklauf einem Vorlauf des Wärmenetzes (2) zugeführt wird.

13. Verfahren gemäß Anspruch 11 oder 12, **gekennzeichnet dadurch, dass** die Einspeisung in das Wärmenetz (2) nach einem zweiten Einspeisemodus erfolgt, wobei hierbei die durch die Wärmeerzeugungsanlage (4) erzeugte über- schüssige Wärmeleistung $P_{\mathrm{excess},t}^{\mathrm{th}}$ auf einen Rücklauf des Wärmenetzes (2) übertragen und der dadurch in seiner Temperatur angehobene Rücklauf in den Rücklauf des Wärmenetzes (2) rückgeführt wird.

14. Verfahren gemäß einem der Ansprüche 11 bis 13, **gekennzeichnet dadurch, dass** die Einspeisung in das Wärmenetz (2) nach einem dritten Einspeisemodus erfolgt, wobei hierbei die durch die Wärmeerzeugungsanlage (4) erzeugte überschüssige Wärmeleistung $P_{\mathrm{excess},t}^{\mathrm{th}}$ auf einen Vorlauf des Wärmenetzes (2) übertragen und der dadurch in seiner Temperatur angehobene Vorlauf in den Vorlauf des Wärmenetzes (2) rückgeführt wird.

15. Verfahren gemäß einem der Ansprüche 11 bis 14, **gekennzeichnet dadurch, dass** die Gewichtungen $g_{d,t}$, $g_{i,t}$ und $g_{e,t}$ durch eine bezüglich mehreren Energiesystemen zentralen Steuervorrichtung (44) bereitgestellt werden.

**Claims**

1. Control unit (42) for controlling operation of a heat generation installation (4) of an energy system, in particular of a building, the energy system being linked to a heat network (2), and feeding-in and/or outputting of a thermal power into the heat network (2) being controllable by means of the control unit (42), a weighting $g_{e,t}$ being associated with the feeding-in, a weighting $g_{d,t}$ being associated with the outputting, and a weighting $g_{i,t}$ being associated with heat generation by the heat generation installation (4), **characterized in that** the control unit (42) is designed:

- to determine an excess thermal power $P^{\text{th}}_{\text{excess},t}$ from the difference between a maximum thermal power $P^{\text{th}}_{\text{max},t}$ of the heat generation installation (4) and a thermal power $P^{\text{th}}_{\text{demand},t}$ required for the energy system;

- to operate the heat generation installation (4) for providing the required thermal power $P^{\text{th}}_{\text{demand},t}$ in the time steps for which $P^{\text{th}}_{\text{demand},t} \cdot g_{d,t} \geq P^{\text{th}}_{\text{max},t} \cdot g_{i,t} - P^{\text{th}}_{\text{excess},t} \cdot g_{e,t}$ ; and

- to output the excess thermal power $P^{\text{th}}_{\text{excess},t}$ generated by the heat generation installation (4) at these points in time into the heat network (2).

2. Control unit (42) according to Claim 1, **characterized in that** each of the weightings $g_{d,t}$, $g_{i,t}$ and $g_{e,t}$ is a pollutant variable or an environment variable.

3. Control unit (42) according to Claim 1 or 2, **characterized in that** each of the weightings $g_{d,t}$, $g_{i,t}$ and $g_{e,t}$ is a specific carbon dioxide emission.

4. Control unit (42) according to any of the preceding claims, **characterized in that** the heat generation installation (4) is designed as a heat pump having a coefficient of performance $COP_t$, the control unit (42) being designed to determine the maximum thermal power from a maximum electrical power of the heat pump by means of $P^{\text{th}}_{\text{max},t} = COP_t \cdot P^{\text{el}}_{\text{max},t}$ .

5. Control unit (42) according to Claim 4, **characterized in that** it is designed to receive at least one measured value of an external temperature $T_t$ from a measuring unit of the energy system, and to determine therefrom the coefficient of performance $COP_t = COP_t(T_t)$ as a function of the external temperature $T_t$.

6. Control unit (42) according to any of the preceding claims, **characterized in that** it is designed to control the feeding-in into the heat network (2) in such a way that the excess thermal power $P^{\text{th}}_{\text{excess},t}$ is fed into a feed of the heat network (2) .

7. Control unit (42) according to any of the preceding claims, **characterized in that** it is designed to control the feeding-in into the heat network (2) in such a way that the excess thermal power $P^{\text{th}}_{\text{excess},t}$ is fed into a return of the heat network (2) .

8. Control unit (42) according to Claim 6 or 7, **characterized in that** it is designed to control the feeding-in into the heat network (2) in such a way that the temperature of the return and/or the feed of the heat network (2) is increased by the feeding-in of the excess thermal power $P^{\text{th}}_{\text{excess},t}$ .

9. Control unit (42) according to any of Claims 6 to 8, **characterized in that** it is designed to control the feeding-in and/or outputting from the feed and/or return of the heat network (2) by way of switching of valves (31).

10. Control unit (42) according to any of the preceding claims, **characterized in that** it has a communication module that enables data exchange with a central control device (44) with respect to a plurality of energy systems, the central control device (44) controlling energy exchanges between the energy systems, and the communication module being designed to receive the weightings $g_{d,t}$, $g_{i,t}$ and $g_{e,t}$ from the central control device (44).

11. Method for controlling operation of a heat generation installation (4) of an energy system, in particular of a building, the energy system being linked to a heat network (2), and feeding-in and/or outputting of a thermal power into the heat network (2) being controllable by means of a control unit (42), a weighting $g_{e,t}$ being associated with the feeding-in, a weighting $g_{d,t}$ being associated with the outputting, and a weighting $g_{i,t}$ being associated with heat generation by the heat generation installation (4), **characterized in that**:

- an excess thermal power $P_{\text{excess},t}^{\text{th}}$ is determined from the difference between a maximum thermal power $P_{\text{max},t}^{\text{th}}$ of the heat generation installation (4) and a thermal power $P_{\text{demand},t}^{\text{th}}$ required for the energy system;

- the heat generation installation (4) is operated for providing the required thermal power $P_{\text{demand},t}^{\text{th}}$ in the time steps for which $P_{\text{demand},t}^{\text{th}} \cdot g_{d,t} \geq P_{\text{max},t}^{\text{th}} \cdot g_{i,t} - P_{\text{excess},t}^{\text{th}} \cdot g_{e,t}$ ; and

- the excess thermal power $P_{\text{excess},t}^{\text{th}}$ generated by the heat generation installation (4) at these points in time is output into the heat network (2).

12. Method according to Claim 11, **characterized in that** the feeding-in into the heat network (2) is effected according to a first feed-in mode, in which case the excess thermal power $P_{\text{excess},t}^{\text{th}}$ generated by the heat generation installation (4) is transferred to a return of the heat network (2) and the return, the temperature of which has been increased as a result, is fed to a feed of the heat network (2).

13. Method according to Claim 11 or 12, **characterized in that** the feeding-in into the heat network (2) is effected according to a second feed-in mode, in which case the excess thermal power $P_{\text{excess},t}^{\text{th}}$ generated by the heat generation installation (4) is transferred to a return of the heat network (2) and the return, the temperature of which has been increased as a result, is fed back into the return of the heat network (2).

14. Method according to any of Claims 11 to 13, **characterized in that** the feeding-in into the heat network (2) is effected according to a third feed-in mode, in which case the excess thermal power $P_{\text{excess},t}^{\text{th}}$ generated by the heat generation installation (4) is transferred to a feed of the heat network (2) and the feed, the temperature of which has been increased as a result, is fed back into the feed of the heat network (2).

15. Method according to any of Claims 11 to 14, **characterized in that** the weightings $g_{d,t}$, $g_{i,t}$ and $g_{e,t}$ are provided by a central control device (44) with respect to a plurality of energy systems.

## Revendications

1. Unité (42) de commande pour la commande du fonctionnement d'une installation (4) de production de chaleur d'un système énergétique, en particulier d'un bâtiment, dans lequel le système énergétique est lié à un réseau (2) de chaleur et, au moyen de l'unité (42) de commande, une entrée d'une puissance calorifique dans le réseau (2) de chaleur et/ou une sortie d'une puissance calorifique du réseau (2) de chaleur peut être commandée, dans laquelle à l'entrée est associée une pondération $g_{e,t}$, à la sortie une pondération $g_{d,t}$ et à une production de chaleur par l'installation (4) de chaleur une pondération $g_{i,t}$, **caractérisée en ce que** l'unité (42) de commande est constituée pour

- déterminer une puissance $P_{\text{excess},t}^{\text{th}}$ calorifique en excès à partir de la différence entre une puissance $P_{\text{max},t}^{\text{th}}$ calorifique maximum de l'installation (4) de production de chaleur et une puissance $P_{\text{demand},t}^{\text{th}}$ calorifique nécessaire au système énergétique ;
- faire fonctionner l'installation (4) de production de chaleur pour disposer de la puissance calorifique $P_{\text{demand},t}^{\text{th}}$ nécessaire dans les laps de temps pour lesquels $P_{\text{demand},t}^{\text{th}} \cdot g_{d,t} \geq P_{\text{max},t}^{\text{th}} \cdot g_{i,t} - P_{\text{excess},t}^{\text{th}} \cdot g_{e,t}$ ; et

- sortir du réseau (2) calorifique la puissance $P_{\text{excess},t}^{\text{th}}$ calorifique en excès produite à ces instants par l'installation (4) de production de chaleur.

2. Unité (42) de commande suivant la revendication 1, **caractérisée en ce que** les pondérations $g_{d,t}$, $g_{i,t}$ et $g_{e,t}$ sont respectivement une grandeur de substance nocive ou une grandeur écologique.

3. Unité (42) de commande suivant la revendication 1 ou 2, **caractérisée en ce que** les pondérations $g_{d,t}$, $g_{i,t}$ et $g_{e,t}$ sont respectivement une émission spécifique de dioxyde de carbone.

4. Unité (42) de commande suivant l'une des revendications précédentes, **caractérisée en ce que** l'installation (4) de production de chaleur est constituée sous la forme d'une pompe à chaleur ayant un indice $COP_t$ de puissance, dans laquelle l'unité (42) de commande est constituée pour déterminer la puissance calorifique maximum, à partir d'une puissance électrique maximum de la pompe à chaleur au moyen de $$P_{\max,t}^{\mathrm{th}} = COP_t \cdot P_{\max,t}^{\mathrm{el}}$$ .

5. Unité (42) de commande suivant la revendication 4, **caractérisée en ce que** celle-ci est constituée pour recevoir au moins une valeur de mesure d'une température $T_t$ extérieure d'une unité de mesure du système énergétique et pour en déterminer l'indice $COP_t = COP_t(T_t)$ de puissance en fonction de la température $T_t$ extérieure.

6. Unité (42) de commande suivant l'une des revendications précédentes, **caractérisée en ce que** celle-ci est constituée pour commander l'entrée dans le réseau (2) de chaleur, de manière à entrer la puissance $P_{\mathrm{excess},t}^{\mathrm{th}}$ calorifique en excès dans une entrée du réseau (2) de chaleur.

7. Unité (42) de commande suivant l'une des revendications précédentes, **caractérisée en ce que** celle-ci est constituée pour commander l'entrée dans le réseau (2) de chaleur, de manière à entrer la puissance $P_{\mathrm{excess},t}^{\mathrm{th}}$ calorifique en excès dans un retour du réseau (2) de chaleur.

8. Unité (42) de commande suivant l'une des revendications 6 ou 7, **caractérisée en ce que** celle-ci est constituée pour commander l'entrée dans le réseau (2) de chaleur, de manière à élever en température le retour et/ou l'entrée du réseau (2) de chaleur par l'entrée de la puissance $P_{\mathrm{excess},t}^{\mathrm{th}}$ calorifique en excès.

9. Unité (42) de commande suivant l'une des revendications 6 à 8, **caractérisée en ce que** celle-ci est constituée pour commander, par une commutation de soupapes (31), l'entrée et/ou la sortie de l'entrée et/ou du retour du réseau (2) de chaleur.

10. Unité (42) de commande suivant l'une des revendications précédentes, **caractérisée en ce que** celle-ci a un module de communication, qui rend possible un échange de données avec un dispositif (44) de commande central concernant plusieurs systèmes énergétiques, dans laquelle le dispositif (44) de commande central commande des échanges d'énergie entre les systèmes énergétiques, et le module de communication est constitué pour recevoir les pondérations $g_{d,t}$ $g_{i,t}$ et $g_{e,t}$ du dispositif (44) de commande central.

11. Procédé de commande d'un fonctionnement d'une installation (4) de production de chaleur d'un système énergétique, en particulier d'un bâtiment, dans lequel le système énergétique est lié à un réseau (2) de chaleur et, au moyen de l'unité (42) de commande, une entrée d'une puissance calorifique dans le réseau (2) de chaleur et/ou une sortie d'une puissance calorifique du réseau (2) de chaleur peut être commandée, dans lequel à l'entrée est associée une pondération $g_{e,t}$, à la sortie une pondération $g_{d,t}$, à une production de chaleur par l'installation (4) de chaleur une pondération $g_{i,t}$, **caractérisé en ce qu'**

- on détermine une puissance $P_{\mathrm{excess},t}^{\mathrm{th}}$ calorifique en excès, à partir de la différence entre une puissance $P_{\max,t}^{\mathrm{th}}$ calorifique maximum de l'installation (4) de production de chaleur et une puissance $P_{\mathrm{demand},t}^{\mathrm{th}}$ calorifique nécessaire au système énergétique ;

- on fait fonctionner l'installation (4) de production de chaleur pour disposer de la puissance $P_{\mathrm{demand},t}^{\mathrm{th}}$

calorifique nécessaire dans les laps de temps, dans lesquels on a

$$P_{\mathrm{demand},t}^{\mathrm{th}} \cdot g_{d,t} \geq P_{\mathrm{max},t}^{\mathrm{th}} \cdot g_{i,t} - P_{\mathrm{excess},t}^{\mathrm{th}} \cdot g_{e,t}$$ ; et

- on sort du réseau (2) de chaleur la puissance $P_{\mathrm{excess},t}^{\mathrm{th}}$ calorifique en excès produite dans ces laps de temps par l'installation (4) de production de chaleur.

12. Procédé suivant la revendication 11, **caractérisé en ce que** l'entrée dans le réseau (2) de chaleur s'effectue suivant un premier mode d'entrée, dans lequel la puissance calorifique $P_{\mathrm{excess},t}^{\mathrm{th}}$ en excès produite par l'installation (4) de production de chaleur est transmise à un retour du réseau (2) de chaleur et le retour ainsi élevé en température est envoyé à une entrée du réseau (2) de chaleur.

13. Procédé suivant la revendication 11 ou 12, **caractérisé en ce que** l'entrée dans le réseau (2) de chaleur s'effectue suivant un deuxième mode d'entrée, dans lequel, dans ce cas, la puissance $P_{\mathrm{excess},t}^{\mathrm{th}}$ calorifique en excès produite par l'installation (4) de production de chaleur est transmise à un retour du réseau (2) de chaleur et le retour ainsi élevé en température est retourné au retour du réseau (2) de chaleur.

14. Procédé suivant l'une des revendications 11 à 13, **caractérisé en ce que** l'entrée dans le réseau (2) de chaleur s'effectue suivant un troisième mode d'entrée, dans lequel, dans ce cas, la puissance $P_{\mathrm{excess},t}^{\mathrm{th}}$ calorifique en excès produite par l'installation (4) de production de chaleur est transmise à une entrée du réseau (2) de chaleur et l'entrée ainsi élevée en température est retournée à l'entrée du réseau (2) de chaleur.

15. Procédé suivant l'une des revendications 11 à 14, **caractérisé en ce que** l'on dispose des pondérations $g_{d,t}$, $g_{i,t}$ et $g_{e,t}$ par un dispositif (44) de commande central concernant plusieurs systèmes énergétiques.

**IN DER BESCHREIBUNG AUFGEFÜHRTE DOKUMENTE**

**In der Beschreibung aufgeführte Patentdokumente**

- EP 3518369 A1
- US 20200049381 A
- DE 102019214132 A1
- US 2018320907 A1
- KR 102145060 B1